# EUROPEAN PATENT APPLICATION

(11) **EP 4 651 291 A1**
(43) Date of publication of application: **19.11.2025**
(21) Application number: 24863261.4
(22) Date of filing: 06.09.2024
(51) Int. Cl.: H01M 50/383, H01M 50/291, H01M 50/211, H01M 50/249

(54) **BATTERY MODULE**

(30) Priority: 08.09.2023 KR 20230119905
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2024/013523
(87) International publication number: WO 2025/053682

(57) **Abstract**

A battery module includes: a frame including an internal space, an open front side, and a top plate with a venting hole formed therein; a plurality of battery cells accommodated in the internal space and arranged in a left-right direction; an end cover coupled to the front side of the frame; and a filling material filled between the plurality of battery cells and the end cover.

## Description

### TECHNICAL FIELD

The present disclosure relates to a battery module.

This application is based on and claims priority from Korean Patent Application No. 10-2023-0119905, filed on September 8, 2023, with the Korean Intellectual Property Office, the disclosure of which is incorporated herein in its entirety by reference.

### BACKGROUND ART

As the demand for portable electronic products such as laptops, video cameras, and mobile phones, rapidly increases, and the commercialization of robots and electric vehicles continues to scale up, research on high-performance secondary batteries, capable of repeated charging and discharging, is actively being conducted.

Currently, commercially available secondary batteries include, for example, nickel-cadmium batteries, nickel-hydrogen batteries, nickel-zinc batteries, and lithium secondary batteries. Among these, lithium secondary batteries are gaining attention due to their advantages over nickel-based secondary batteries, such as rarely occurring memory effect that allows a free charging and discharging, substantially low self-discharge rates, and high energy density.

As lithium secondary batteries gain attention as energy sources for various types of electronic products, robots, and electric vehicles, numerous studies are being conducted to improve the safety of these lithium secondary batteries.

### DISCLOSURE

### Technical Problem

The present disclosure provides a battery module with improved electrical safety when a thermal event occurs in the battery module.

In addition, the present disclosure provides a battery module capable of discharging venting gases, ignitable particles, and flames, to an upper side of the battery module when a thermal event occurs in the battery module.

In addition, the present disclosure may provide a battery module that includes a structure capable of maintaining an electrically insulated state between the end cover and a battery cell, when a thermal event occurs in the battery module.

Furthermore, the present disclosure provides a battery module with controllable venting when a thermal event occurs therein.

### Technical Solution

In view of the foregoing, a battery module according to an aspect of the present disclosure may include: a frame including an internal space, an open front side, and a top plate with a venting hole formed therein; multiple battery cells accommodated in the internal space and arranged in a left-right direction; an end cover coupled to the front side of the frame; and a filling material filled between the multiple battery cells and the end cover.

The frame may further include a monitoring hole that exposes the filling material to the outside so that the filling material may be monitored from outside.

The venting hole may expose the top surfaces of the multiple battery cells.

Each of the multiple battery cells may include a body and a front terrace protruding forward of the body, and the filling material may be filled to enclose the front terrace.

Each of the multiple battery cells may include a body and an electrode lead protruding forward from the body, and the filling material may be filled to enclose the front terrace.

The filling material may extend to at least partially cover the top surfaces of the multiple battery cells.

The internal space may further include a partition wall extending in a front-rear direction.

The partition wall and the frame may be formed integrally.

The frame may further include a bottom plate facing the top plate, and the partition wall interconnects the top plate and the bottom plate.

Multiple venting holes may be provided and may each be located in the space partitioned by the partition wall.

Each of the multiple battery cells may include a body and an electrode lead protruding forward from the body, and the partition wall may protrude further forward than the bodies of the multiple battery cells.

The filling material may be filled to enclose the front side of the partition wall.

The frame may include a front wall protruding inward from the top plate.

A battery pack according to an aspect of the present disclosure includes the battery module according to the present disclosure.

A vehicle according to an aspect of the present disclosure includes a battery module according to the present disclosure.

### Advantageous Effects

According to at least one of the embodiments of the present disclosure, the electrical safety of the battery module may be improved over the conventional battery module.

According to at least one of the embodiments of the present disclosure, venting control of the battery module may be facilitated.

### DESCRIPTION OF DRAWINGS

The following drawings attached hereto exemplify embodiments of the present disclosure and, together with the detailed description to be described later, serve to further understand the technical idea of the present disclosure. Therefore, the present disclosure should not be construed as being limited to the matters illustrated in the drawings.
FIG. 1 is a perspective view illustrating a battery module according to an embodiment of the present disclosure.
FIG. 2 is a perspective view illustrating the configuration of the battery module of FIG. 1 with a portion of configuration disassembled.
FIG. 3 is a perspective view illustrating a frame of a battery module according to an embodiment of the present disclosure.
FIG. 4 is a cross-sectional view of the frame of FIG. 3.
FIG. 5 is an enlarged perspective view of the battery module of FIG. 1.
FIG. 6 is a view of the drawing of battery module of FIG. 1 viewed from a bottom side.
FIG. 7 is a view illustrating a portion of a cross-sectional configuration taken along cutting line A-A' in FIG. 1.
FIG. 8 is a view illustrating a portion of a cross-sectional configuration taken along cutting line B-B' in FIG. 1.
FIGS. 9 and 10 are views illustrating a portion of a cross-sectional configuration taken along cutting line C-C' in FIG. 1.
FIG. 11 is a view illustrating a portion of a cross-sectional configuration taken along cutting line D-D' in FIG. 1.
FIG. 12 is a view illustrating a modification of the embodiment of FIG. 11.
FIG. 13 is a perspective view illustrating a frame of a battery module according to another embodiment of the present disclosure.
FIG. 14 is a view illustrating a portion of configuration of the battery module of the other embodiment of the present disclosure.

In some of the accompanying drawings, corresponding components are given the same reference numerals. A person ordinarily skilled in the art will appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often not be described in order to avoid impeding the understanding of the spirit of various embodiments of the present disclosure.

### Mode for Invention

Hereinafter, embodiments of the present disclosure will be described in detail with reference to the accompanying drawings. Prior to this, the terms or words used in the specification and claims should not be construed as being limited to their usual or dictionary meanings, but should be interpreted as having meanings and concepts that conform to the technical idea of the present disclosure, based on the principle that the inventor may appropriately define the concepts of terms in order to explain his or her invention appropriately.

Therefore, the embodiments described in this specification and the configurations illustrated in the drawings are only embodiments of the present disclosure and do not fully represent the technical idea of the present disclosure. Therefore, it should be understood that there may be various equivalents and modifications that can replace the embodiments and configurations at the time of filing this application.

Lithium secondary batteries mainly use lithium-based oxides and carbon materials as positive and negative active materials, respectively. The lithium secondary batteries include an electrode assembly in which positive and negative electrode plates are coated with the positive and negative active materials, respectively, and are disposed with a separator interposed therebetween, and an exterior material, e.g., a battery case, that seals and accommodates the electrode assembly together with an electrolyte.

In general, lithium secondary batteries may be classified into can-type secondary batteries, in which an electrode assembly is built into a metal can, and pouch-type secondary batteries, in which an electrode assembly is built into a pouch of an aluminum laminate sheet, depending on the shape of the outer packaging material.

Recently, secondary batteries have been widely used for driving other devices and energy storage not only in small devices such as portable electronic devices but also in medium and large devices such as electric vehicles (EV) and energy storage systems (ESS). These secondary batteries may be housed together inside a module case, in the state of being electrically connected in large numbers, to form a single battery module. In addition, multiple battery modules may be connected to form a single battery pack.

When multiple secondary batteries (battery cells) or multiple battery modules are packed in a relatively narrow space, they may be vulnerable to thermal events. For example, when a thermal event such as thermal runaway occurs in one of the battery cells, high-temperature gases, flames (e.g., fires), and heat may be generated. When these gases, flames, and heat are transmitted to other battery cells within the same battery module, an explosive chain reaction, such as thermal propagation, may occur. In addition, this chain reaction may cause accidents such as fire or explosions in the aforementioned battery module, as well as in other battery modules.

In addition, for medium and large sized battery packs, such as those for electric vehicles, the risk of a thermal chain reaction may increase further as a large number of battery cells and battery modules are included to increase output and/or capacity. In addition, in the case of battery packs mounted on, for example, electric vehicles, there may be users for the electric vehicles such as drivers in the vicinity. Therefore, when a thermal event that occurs in a specific battery cell or module is not properly controlled and a chain reaction occurs, not only may it cause significant property damage, but it may also result in human casualties.

In conventional battery modules, an insulating cover is sometimes positioned at the portion where the electrode leads of each battery cell are located to ensure insulation between the electrode leads and the module case. At this time, the insulating cover is typically a plastic injection-molded product, which has a problem of being weak to flames. Therefore, when flames or venting gases emitted from a specific battery cell are directed to the insulating cover, the insulating cover may melt and fail to properly protect the welding portion between adjacent electrode leads.

Furthermore, when the internal discharge generated during the ignition of the battery cells, such as the residue produced when, for example, the battery cells or bus bar housings melt, is directed toward the electrode leads, it may cause an internal short circuit. In addition, when an electrode lead moves while the venting gases are emitted, it may come into contact with another electrode lead that was not connected, potentially causing an internal short circuit. In addition, since the portion where the electrode leads are located, *e.g.,* the portion where the terraces of the battery cells are located, is relatively wide, there is a high possibility that flames or venting gases (*e.g.,* gases to be vented) will become concentrated and flow into the portion where terraces of the battery cells are located. Therefore, the flames or gases may cause thermal runaway in other battery cells.

In addition, module terminals or connector terminals are often located in the portion of the module where the electrode leads are located, and the venting gases or flames may be discharged to the outside of the battery module through gaps or voids, which are formed in these module terminals or connector terminals. In this case, the possibility of thermal runaway propagation between battery modules may increase.

Embodiments of the present disclosure provide a battery module with improved electrical safety and facilitate venting control of the battery module.

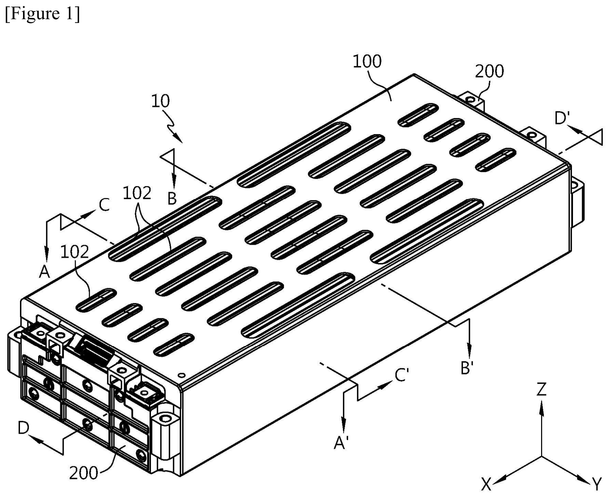

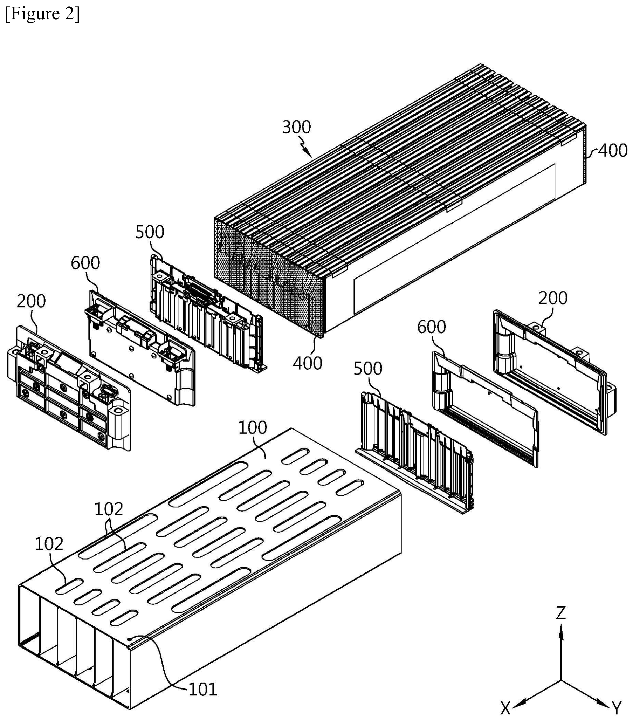

FIG. 1 is a perspective view illustrating a battery module 10 according to an embodiment of the present disclosure. FIG. 2 is a perspective view illustrating the configuration of the battery module 10 of FIG. 1 with a portion of configuration disassembled. Referring to FIGS. 1 and 2, a battery module 10 according to an embodiment of the present disclosure may include a frame 100, an end cover 200, a battery cell 300, and a filling material 400.

According to an embodiment, the frame 100 may form the exterior of the battery module 10 and may have a rectangular parallelepiped shape. In addition, the frame 100 may have an open shape on the front side and the rear side, and may provide a space that accommodates, for example, the battery cells 300 inside. The frame 100 may include a top plate 110 forming a top surface, and the top plate 110 may have a venting hole 102. In this case, multiple venting holes 102 may be provided and configured in a circular or elliptical shape. The frame 100 may also include a bottom plate 120 forming a bottom surface.

According to an embodiment, the battery cell 300 may refer to a secondary battery having a pouch shape, and multiple battery cells may be provided. In an embodiment, battery cells 300 may extend in the front-rear direction or the X-axis direction, and may be stacked, arranged, or aligned in the left-right direction or the Y-axis direction. The multiple battery cells 300 may be accommodated in the internal space of the frame 100.

A pair of end covers 200 may be provided and coupled to openings, for example, at the front and rear sides of the frame 100, respectively.

The filling material 400 may be filled between the plurality of battery cells 300 and the end covers 200 according to an embodiment. At this time, the filling material 400 may include a resin. For example, the filling material 400 may include, for example, a urethane series material and a silicone series material, and may additionally include, for example, a filler in consideration of, for example, heat resistance/fire resistance performance. In addition, depending on the location and purpose of use of the filler material, electrical insulation performance and chemical resistance may be required in addition to heat resistance/fire resistance.

With the configuration of the present disclosure, when a thermal event occurs, the venting gases, ignitable particles, or flames may be suppressed from being emitted in the front-rear direction or the X-axis direction, due to the filling material 400 filled between the multiple battery cells 300 and the end covers 200. Therefore, the venting gases, ignitable particles, or flames may be discharged to the upper side of the battery cells 300 and may be discharged to the outside of the battery module 10 through, for example, the venting holes 102 in the top plate 110. Therefore, the filling material 400 according to an embodiment of the present disclosure may facilitate venting control of the battery module 10.

Continuing with reference to FIGS. 1 and 2, the battery module 10 according to an embodiment of the present disclosure may include bus bar frame assemblies 500 and insulating covers 600. The bus bar frame assemblies 500 may be electrically and physically connected to the multiple battery cells 300. According to an embodiment, the insulating covers 600 may be located between the end covers 200 and the bus bar frame assemblies 500 to prevent the end covers 200 and the bus bar frame assemblies 500 from electrically contacting each other or short-circuiting.

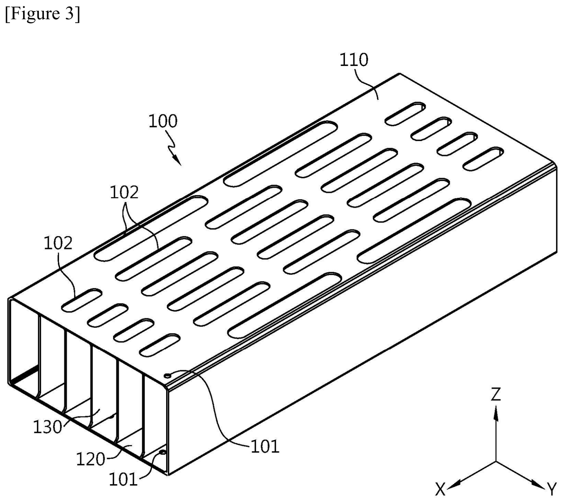

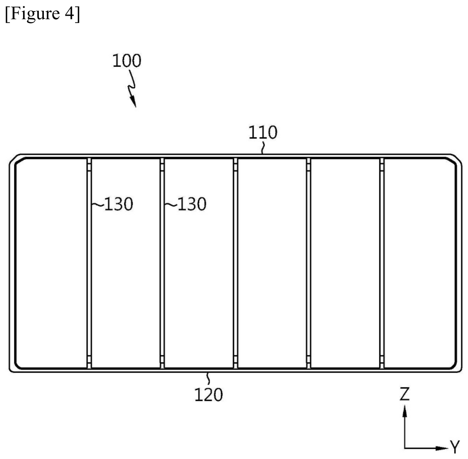

FIG. 3 is a perspective view illustrating the frame 100 of a battery module according to an embodiment of the present disclosure. FIG. 4 is a front view of the frame 100 of FIG. 3 viewed in the X-axis direction. Referring to FIGS. 3 and 4, the frame 100 of the battery module 10 according to an embodiment of the present disclosure may further include a partition wall 130. The partition wall 130 may partition the internal space provided by the frame 100 and may extend in the front-rear direction or the X-axis direction. Multiple partition walls 130 may be provided, and the multiple partition walls 130 may be arranged or aligned in the left-right direction or the Y-axis direction. Multiple battery cells 300 may be accommodated in the internal space partitioned by the partition walls 130. For example, the multiple battery cells 300 may be divided into multiple groups by the partition walls 130 to be accommodated with the groups.

With the configuration of the present disclosure, the thermal safety of the battery module 10 may be secured. For example, since thermal events are controlled in the units of space partitioned by the partition walls 130, the propagation of thermal events may be suppressed.

For example, even when a thermal event occurs in a space partitioned by the partition walls 130, the thermal event may be suppressed from propagating to another space adjacent to the space.

In addition, since the frame 100 includes the venting holes 102 on the upper side thereof, the venting gases, ignitable particles, or flames may be discharged to the outside of the battery module without propagating to another adjacent space. As a result, the damage range of the thermal event may be limited to the space that accommodates the battery cell 300 where the thermal event occurred.

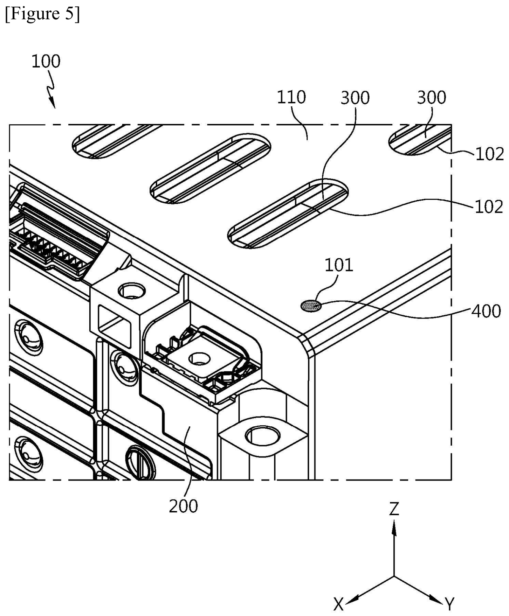

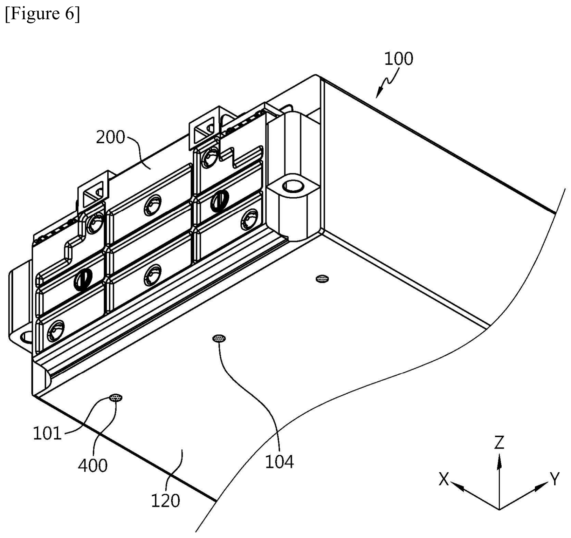

FIG. 5 is an enlarged perspective view of the battery module 10 of FIG. 1. FIG. 6 is a partially exploded perspective view of the battery module 10 of FIG. 1 viewed from the inside. Referring to FIGS. 3 to 6, a battery module according to an embodiment of the present disclosure may include monitoring holes 101.

In addition, the frame 100 may include holes that are distinct from the venting holes 102. In this case, multiple holes may be provided, wherein some of the holes may be injection holes 104 into which the filling material 400 is injected, and the remaining holes may be the monitoring holes 101. The injection holes 104 or the monitoring holes 101 may be formed on at least one of the top surface, bottom surface, and the side surface of the frame 100.

The monitoring holes 101 may expose the filling material 400 to the outside so that the filling material 400 may be monitored from outside. The filling member 400 may exhibit fluidity at high temperatures and may be solidified at room temperature. The filling material 400 may be filled into the inside of the battery module 10 through the injection holes 104 in the state of having fluidity. In addition, through the monitoring holes 101, it may be confirmed (determined) whether the filling material 400 is sufficiently injected. When the filling material 400 is sufficiently injected, the filling material 400 may be exposed to the outside through the monitoring holes 101. With the configuration of the present disclosure, it may be relatively easy to confirm, through the monitoring holes 101, whether the filling material 400 was properly filled. As a result, the productivity and safety of the battery module 10 may be improved.

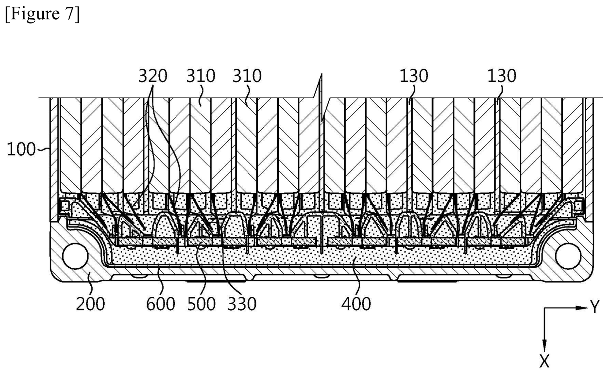

FIG. 7 is a view illustrating a portion of a cross-sectional configuration taken along cutting line A-A' in FIG. 1. Referring to FIG. 7, each of the multiple battery cells 300 of the battery module 10 according to an embodiment of the present disclosure may include a body 310 and a terrace 320. The terrace 320 is the portion where the terminals of the electrodes inside the battery cell 300 are brought together and grouped according to their polarities, and the terminals brought together in this way become electrode leads to form an electrical connection. The terrace 320 is also used as a space for absorbing the venting gases generated inside the battery cell 300. Thus, in some cases, the filling material 400 may have specifications that allow some deformation even after hardening, such as those with a silicone base.

The body 310 may include an electrode assembly and a cover that encloses the electrode assembly. The body 310 may extend in the front-rear direction or the X-axis direction. The terrace 320 may protrude from the body 310 in the front-rear direction or the X-axis direction. The terrace 320 may include a front terrace 320 and a rear terrace 320. The filling material 400 may be filled to enclose the front terrace 320 or the rear terrace 320.

With the configuration of the present disclosure, venting control of the battery module may be facilitated. For example, when a thermal event occurs, since the filling material 400 encloses the front terraces 320 or the rear terraces 320, the discharge of venting gases, ignitable particles, or flames through the front terraces 320 or the rear terraces 320 may be suppressed. As a result, the venting gases, ignitable particles, or flames may be discharged to the upper sides of the battery cells 300 through, for example, the venting holes 102.

Referring to FIG. 7, each of the multiple battery cells 300 of the battery module 10 according to one embodiment of the present disclosure may further include electrode leads 330.

The electrode lead 330 may protrude from the body 310 in the front-rear direction or in the X-axis direction. The terrace 320 may include a front-side electrode lead 330 and a rear-side electrode lead 330, and the filling material 400 may be filled to enclose the electrode leads 330.

With the configuration of the present disclosure, venting control of the battery module 10 may be facilitated. For example, when a thermal event occurs, since the filling material 400 encloses the electrode leads 330, the discharge of venting gases, ignitable particles, or flames through the electrode leads 330 may be suppressed. As a result, the venting gases, ignitable particles, or flames may be discharged to the upper sides of the battery cells 300 through, for example, the venting holes 102.

Referring to FIG. 7, the partition walls 130 of the battery module 10 according to an embodiment of the present disclosure may be configured to protrude further forward in the X-axis direction than the bodies 310 of the multiple battery cells 300.

With the configuration of the present disclosure, the thermal safety of the battery module 10 may be secured. For example, since the partition walls 130 protrude further forward than the bodies 310 of the battery cells 300, the partition in the space may be made more certain. Therefore, even when a thermal event occurs, the thermal event may be suppressed from propagating to an adjacent partitioned space.

Referring to FIG. 7, the filling material 400 of the battery module 10 according to an embodiment of the present disclosure may be filled to enclose the front sides of the partition walls 130. In addition, the filling material 400 may fill the space between the partition walls 130 and the front terraces 320, and may also fill the space between the partition walls 130 and the electrode leads 330.

With the configuration of the present disclosure, venting control of the battery module 10 may be facilitated. For example, when a thermal event occurs, since the filling material 400 is filled to enclose the partition walls 130, the discharge of venting gases, ignitable particles, or flames through the partition walls 130 may be suppressed. Therefore, the venting gases, ignitable particles, or flames may be discharged to the upper sides of the battery cells 300.

In addition, according to the configuration of the present disclosure, the filling material 400 may prevent the partition walls 130 and the electrode leads 330 from electrically contacting or short-circuiting. In addition, the filling material 400 may prevent the partition walls 130 and the front terraces 320 from electrically contacting or short-circuiting. As a result, the electrical safety of the battery module may be improved.

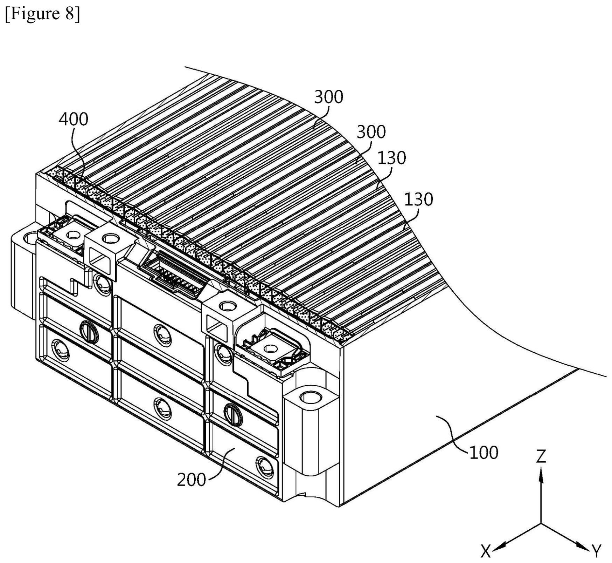

FIG. 8 is a view illustrating a portion of a cross-sectional configuration taken along cutting line B-B' in FIG. 1. Referring to FIG. 8, the filling material 400 of the battery module 10 according to an embodiment of the present disclosure may be filled up to the height of the bodies 310. According to an embodiment, the filling material 400 may be filled to enclose the front terraces 320 or the rear terraces 320 of the battery cells 300 in their entirety.

With the configuration of the present disclosure, venting control of the battery module may be facilitated. For example, when a thermal event occurs, since the filling material 400 entirely encloses the front terraces 320 or the rear terraces 320, the discharge of venting gases, ignitable particles, or flames through the front terraces 320 or the rear terraces 320 may be suppressed. Therefore, the venting gases, ignitable particles, or flames may be discharged to the upper sides of the battery cells 300.

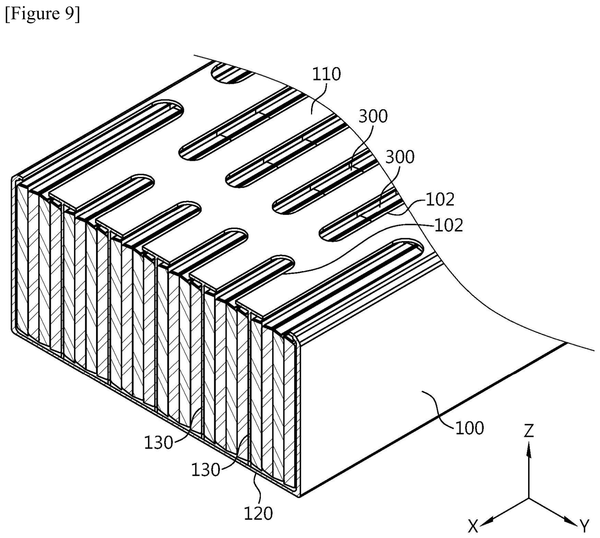

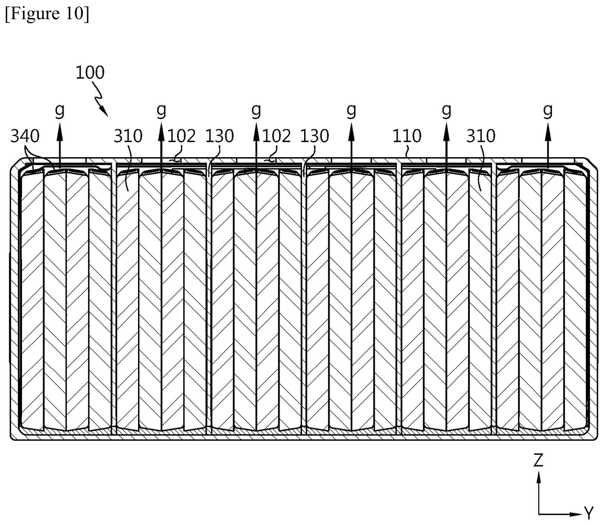

FIGS. 9 and 10 are views illustrating a portion of a cross-sectional configuration taken along cutting line C-C' in FIG. 1. Referring to FIGS. 9 and 10, the venting holes 102 of the battery module 10 according to an embodiment of the present disclosure may expose the top surfaces of the multiple battery cells 300.

With the configuration of the present disclosure, venting control of the battery module 10 may be facilitated. For example, when a thermal event occurs, venting gases, ignitable particles, or flames may be discharged from the upper terraces 340 or the top surfaces of the multiple battery cells 300. In addition, the venting gases, ignitable particles, or flames may be discharged to the outside of the battery module through the venting holes 102. As a result, the thermal event may be suppressed from propagating to the battery cells 300 in an adjacent partitioned space.

Referring to FIGS. 9 and 10, the partition walls 130 of the battery module 10 according to an embodiment of the present disclosure may be formed integrally with the frame 100. For example, the frame 100 and the partition walls 130 may be manufactured through an extrusion method. In addition, according to an embodiment, the frame 100 and the partition walls 130 may include a metal material.

With the configuration of the present disclosure, the partition walls 130 may partition the internal space of the frame 100 into partitioned spaces, and the partitioned spaces may stably maintain their shape under expansion pressure. For example, even when a thermal event or swelling occurs from one partitioned space, the partition walls 130 may withstand the thermal even or swelling with high rigidity, and the damages transmitted to the battery cells 300 of an adjacent partitioned space may be blocked. As a result, the battery module 10 may exhibit improved thermal safety.

Referring to FIGS. 9 and 10, the frame 100 of the battery module according to an embodiment of the present disclosure may include a top plate 110 and a bottom plate 120 configured to face each other. In addition, the multiple partition walls 130 may each interconnect the top plate 110 and the bottom plate 120.

With the configuration of the present disclosure, the thermal safety of the battery module may be further improved.

Referring to FIGS. 9 and 10, according to an embodiment of the present disclosure, the battery module 10 may be provided with multiple venting holes 102. In addition, the multiple partition walls 130 may partition the internal space of the frame 100 into multiple spaces. Each of the multiple partitioned spaces may have at least one venting hole 102.

With the configuration of the present disclosure, the battery module exhibits improved thermal safety. For example, even when a thermal event occurs in one of the spaces partitioned by the multiple partition walls 130, venting gases, ignitable particles, or flames, may not be transmitted to an adjacent partitioned space but may be discharged to the outside through the venting hole 102 of the corresponding partitioned space.

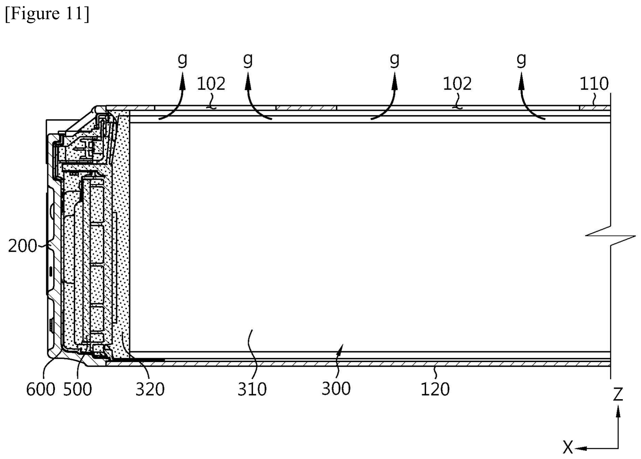

FIG. 11 is a view illustrating a portion of a cross-sectional configuration taken along cutting line D-D' in FIG. 1. Referring to FIG. 11, when a thermal event occurs in a battery module 10 according to an embodiment of the present disclosure, the filling material 400 may prevent venting gases, ignitable particles, or flames from being discharged forward or backward, and the venting gases, ignitable particles, or flames may be discharged through the top surfaces or upper terraces 340 of the battery cells 300. With the configuration of the present disclosure, venting control of the battery module 10 may be facilitated.

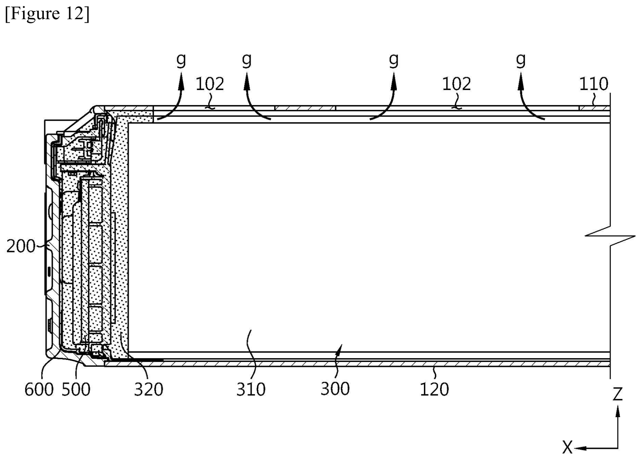

FIG. 12 is a view illustrating a modification of the embodiment of FIG. 11. Referring to FIG. 12, the filling material 400 of the battery module 10 according to an embodiment of the present disclosure may extend to at least partially cover the top surfaces of the multiple battery cells 300. Alternatively, the filling material 400 may extend to at least partially cover the upper terraces 340 of the multiple battery cells 300. In this case, the filling material 400 may be filled up to the front of a venting hole 102 located at the frontmost position among the multiple venting holes 102. Alternatively, the filling material 400 may be filled up to the rear of a venting hole 102 located at the rearmost position among the multiple venting holes 102.

With the configuration of the present disclosure, the filling material 400 may more strongly suppress venting gases, ignitable particles, or flames from being discharged forward or rearward, and may induce the suppressed venting gases, ignitable particles, or flames to be discharged upward, so that venting control of the battery module 10 may be facilitated.

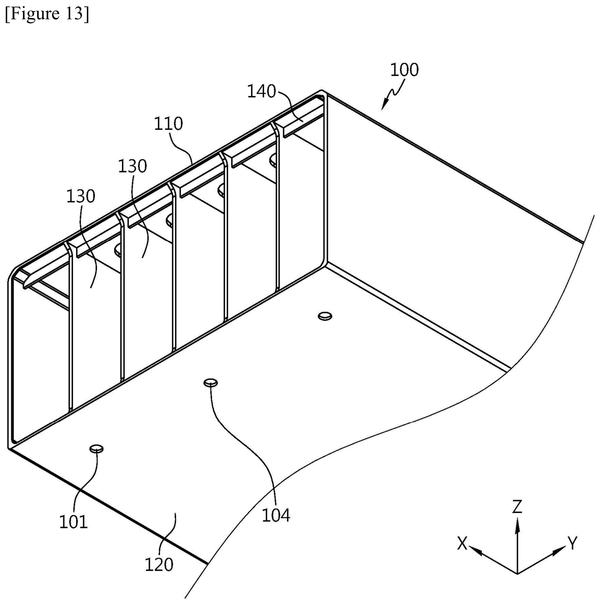

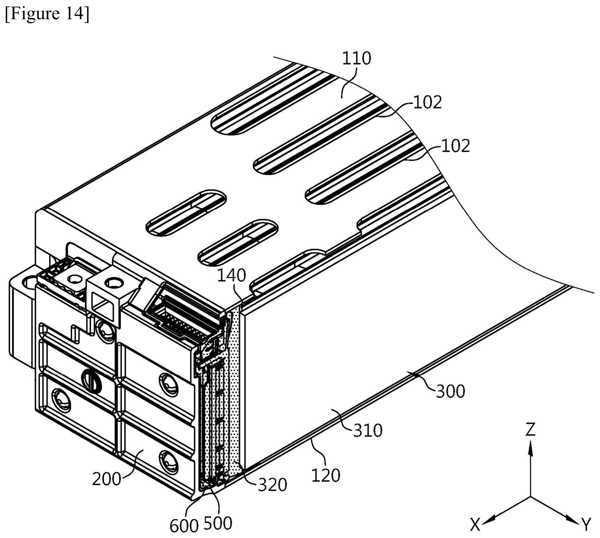

FIG. 13 is a view illustrating a frame 100 of a battery module 10 according to another embodiment of the present disclosure. FIG. 14 is a view illustrating a portion of configuration of the battery module 10 of the other embodiment of the present disclosure. Referring to FIGS. 13 and 14, the frame 100 of the battery module 10 according to an embodiment of the present disclosure, may include a front wall 140 protruding inward from the top plate 110.

The front wall 140 may protrude from the bottom surface of the top plate 110 and may extend in the left-right direction or the Y-axis direction. The front wall 140 may at least partially cover, for example, a partition wall 130 or may cover the front end of a partition wall 130. In addition, the front wall 140 may be connected to multiple partition walls 130 and may protrude to come into contact or close contact with or be located adjacent to the top surfaces or upper terraces 340 of multiple battery cells 300.

With the configuration of the present disclosure, the front wall 140 may limit the filling position of the filling material 400. For example, the front wall 140 may control the filling of the filling material by blocking the filling material 400 having fluidity from being filled or flowing rearward beyond the front wall 140.

A battery pack according to the present disclosure may include the battery module 10 according to the present disclosure described above. In addition, the battery pack according to the present disclosure may further include various other components, for example, components of a battery pack known at the time of filing of the present disclosure, such as a Battery Management System (BMS), a bus bar, a pack case, a relay, and a current sensor, in addition to the battery module according to the present disclosure described above.

Meanwhile, the battery module 10 and the battery pack may not be strictly distinguished terms, and in certain contexts, the battery module 10 and the battery pack may be used interchangeably in meaning. For example, a battery pack that does not include a BMS may refer to a battery module, and when considering an embodiment in which the battery module functions as a battery pack, the battery module may be referred to as a battery pack.

The vehicle according to the present disclosure may include the battery module 10 according to the present disclosure described above. The battery module 10 according to the present disclosure may be applied to a vehicle such as an electric vehicle or a hybrid vehicle, and the vehicle according to the present disclosure may further include various other components included in a vehicle, such as a vehicle body, a motor, or a control device, such as an electronic control unit (ECU), in addition to the battery module 10.

In this specification, directional terms such as up, down, left, right, front, and rear are used, but it is obvious to a person ordinarily skilled in the art that these terms are for convenience of description only and may vary depending on, for example, the location of an object thing or the position of an observer.

As described above, while the present disclosure has been described with limited embodiments and drawings, the present disclosure is not limited to those described above, and it is apparent that various modifications may be made by those of ordinary skill in the technical field to which the present disclosure belongs within the technical spirit and equivalent scope of the claims described below.

## Claims

1. A battery module comprising:
a frame including an internal space, an open front side, and a top plate with a venting hole formed therein;
a plurality of battery cells accommodated in the internal space and arranged in a left-right direction;
an end cover coupled to the front side of the frame; and
a filling material filled between the plurality of battery cells and the end cover.

2. The battery module of claim 1, wherein the frame further includes a monitoring hole configured to expose the filling material to an outside so that the filling material is monitored from the outside.

3. The battery module of claim 1, wherein the venting hole is configured to expose top surfaces of the multiple battery cells.

4. The battery module of claim 1, wherein each of the multiple battery cells includes a body and a front terrace protruding forward of the body, and
wherein the filling material is filled to enclose the front terrace.

5. The battery module of claim 1, wherein each of the multiple battery cells includes a body and an electrode lead protruding forward of the body, and
wherein the filling material is filled to enclose the electrode lead.

6. The battery module of claim 1, wherein the filling material extends to at least partially cover top surfaces of the multiple battery cells.

7. The battery module of claim 1, further comprising:
a partition wall that partitions the internal space and extends in a front-rear direction.

8. The battery module of claim 7, wherein the partition wall and the frame are formed integrally.

9. The battery module of claim 7, wherein the frame further includes a bottom plate facing the top plate, and
wherein the partition wall interconnects the top plate and the bottom plate.

10. The battery module of claim 7, wherein a plurality of venting holes is provided, and each of the plurality of venting holes is located in the space partitioned by the partition wall.

11. The battery module of claim 7, wherein each of the plurality of battery cells includes a body and an electrode lead protruding forward of the body, and
wherein the partition wall protrudes further forward than the bodies of the multiple battery cells.

12. The battery module of claim 11, wherein the filling material is filled so as to enclose a front side of the partition wall.

13. The battery module of claim 1, wherein the frame includes a front wall protruding inward from the top plate.

14. A battery pack comprising the battery module of claim 1.

15. A vehicle comprising the battery module of claim 1.

16. A battery module comprising:
a main frame including an internal space, an open front side, a top plate with a venting hole formed therein, and a bottom plate opposite to the top plate;
a partition wall that partitions the internal space and extends in a length direction of the frame, wherein the partition wall is configured to interconnect the top plate and the bottom plate;
a plurality of battery cells accommodated in the internal space and arranged in a left-right direction;
an end cover coupled to the open front side of the frame; and
a filling material configured to suppress venting gases, ignitable particles, or flames between the multiple battery cells and the end cover with reference to a position where the plurality of battery cells are accommodated in the internal space,
wherein each of the plurality of battery cells includes a body and an electrode lead protruding forward of the body, and
wherein the filling material is filled to enclose an electrode lead of each of the multiple battery cells.

17. The battery module of claim 16, wherein the filling material is made of a urethane or silicone series material.

18. A battery module frame comprising:
a main frame including an internal space designed to accommodate multiple battery cells, an open front side, a top plate with a venting hole formed therein, and a bottom plate opposite to the top plate;
a partition wall that partitions the internal space and extends in a length direction of the frame, wherein the partition wall is configured to interconnect the top plate and the bottom plate;
an end cover coupled to the open front side of the frame; and
a filling material configured to suppress venting gases, ignitable particles, or flames between the multiple battery cells and the end cover with reference to a position where the multiple battery cells are accommodated in the internal space.

19. The battery module frame of claim 18, wherein the filling material is made of a urethane or silicone series material.
